# EUROPEAN PATENT SPECIFICATION

(11) **EP 2 572 333 B1**
(45) Date of publication and mention of the grant of the patent: **09.09.2015**
(21) Application number: 11723707.3
(22) Date of filing: 16.05.2011
(51) Int. Cl.: G06T 7/00

(54) **HANDLING A SPECIMEN IMAGE**
HANDHABUNG EINES PROBENBILDES
TRAITEMENT D'UNE IMAGE D'ÉCHANTILLON

(30) Priority: 19.05.2010 EP 10163262
(43) Date of publication of application: 27.03.2013
(73) Proprietor: Koninklijke Philips N.V., 5656 AE Eindhoven (NL); Philips Intellectual Property & Standards GmbH, 20099 Hamburg (DE)
(72) Inventor: MEETZ, Kirsten, NL-5656 AE Eindhoven (NL); BUELOW, Thomas, NL-5656 AE Eindhoven (NL); CARLSEN, Ingwer Curt, NL-5656 AE Eindhoven (NL); BERGTHOLDT, Martin, NL-5656 AE Eindhoven (NL)
(74) Representative: van Velzen, Maaike Mathilde
(86) International application number: PCT/IB2011/052129
(87) International publication number: WO 2011/145037

(56) References cited:
- DAHELE M ET AL: "Developing a methodology for three-dimensional correlation of PET-CT images and whole-mount histopathology in non-small-cell lung cancer.", CURRENT ONCOLOGY (TORONTO, ONT.) OCT 2008 LNKD- PUBMED:19008992, vol. 15, no. 5, October 2008 (2008-10), pages 62-69, XP000002658199, ISSN: 1198-0052
- PHILIPJ EDWARDS ET AL: "Validation of PET Imaging by Alignment to Histology Slices", MEDICAL IMAGE COMPUTING AND COMPUTER-ASSISTED INTERVENTION - MIC CAI 2005 LECTURE NOTES IN COMPUTER SCIENCE;;LNCS, SPRINGER, BERLIN, DE, vol. 3750, 1 January 2005 (2005-01-01), pages 968-975, XP019021736, ISBN: 978-3-540-29326-2
- SIEREN J C ET AL: "A Process Model for Direct Correlation between Computed Tomography and Histopathology", ACADEMIC RADIOLOGY, RESTON, VA, US, vol. 17, no. 2, 1 February 2010 (2010-02-01), pages 169-180, XP026826533, ISSN: 1076-6332 [retrieved on 2010-01-05]
- SCHMIDT-ULLRICH R ET AL: "Tumor margin assessment as a guide to optimal conservation surgery and irradiation in early stage breast carcinoma", INTERNATIONAL JOURNAL OF RADIATION: ONCOLOGY BIOLOGY PHYSICS, PERGAMON PRESS, USA, vol. 17, no. 4, 1 October 1989 (1989-10-01), pages 733-738, XP026843689, ISSN: 0360-3016 [retrieved on 1989-10-01]
- GURCAN M N ET AL: "Histopathological Image Analysis: A Review", IEEE REVIEWS IN BIOMEDICAL ENGINEERING, IEEE, USA, vol. 2, 1 January 2009 (2009-01-01), pages 147-171, XP011328178, ISSN: 1937-3333, DOI: 10.1109/RBME.2009.2034865

## Description

### FIELD OF THE INVENTION

The invention relates to handling a specimen image.

### BACKGROUND OF THE INVENTION

New scanning technologies have improved the detection of early breast cancer. This causes an increase in the number of surgical procedures performed involving dissection of cancerous tissue, such as ductal carcinoma in situ (DCIS). The dissection of DCIS is a challenging task. In order to assure that the complete DCIS lump including a cancer-free margin has been dissected, the following steps may be undertaken. A pre-operational planning based on mammograms is performed carefully, in order to assess the size and the location of the lump. The location of the lump is marked using guide wires. During the lumpectomy, the dissected tissue is examined, using for example x-ray imaging of the dissected tissue, in order to assess whether its margin is cancer-free. If it is found that the dissected specimen has an insufficient margin of cancer-free tissue, the surgeon dissects more tissue.

Haptic feedback and ultrasound information do not show DCIS. Instead, the breast surgeon relies on a specimen radiogram, obtained by means of x-ray, in order to check whether he has dissected the complete lump. If a resection of additional breast tissue is needed, the breast surgeon identifies which additional part of the breast has to be resected. To this end, the breast surgeon may set markers on the resected tissue to indicate the direction of the mammilla, the direction of the axilla, and the direction of the lateral and medial part of the thorax. However, the determination of which additional part to resect is an error-prone and time-consuming task that is performed under significant time-pressure whilst the narcotized patient is still lying on the operating table.

The article by Dahele et al. "Developing a methodology for three-dimensional correlation of PET-CT images and whole-mount histopathology in non-small-cell lung cancer", 2008, discloses a method for aligning a pre-operation 3D image with an image of a specimen which has been resected.

### SUMMARY OF THE INVENTION

It would be advantageous to have an improved system for handling a specimen image. To better address this concern, a first aspect of the invention provides a system as defined in claim 1.

The alignment helps the user to correlate the findings based on the specimen image with a location in the body. This may help to draw a clinical diagnosis or to identify a portion of the body which needs further treatment.

The system comprises a border detector configured to detect at least part of an outer border of the dissected portion. The outer border of the dissected portion makes the processing of the specimen image more efficient. For example, the outer border of the dissected portion may be used to define a region of interest (ROI). Such a region of interest may be used by the alignment unit for avoiding taking into account a portion of the specimen image which does not contain relevant information.

The alignment unit may be configured to compute the alignment also based on the outer border of the dissected portion. For example, the alignment unit may be configured to ignore any image portion except the outer border of the dissected portion in the alignment process. This improves the alignment result.

The system comprises a border analyzer for identifying a predetermined tissue type in a margin of the specimen adjacent the outer border. When the goal of the surgeon is to remove a predetermined tissue type, the surgeon may wish to dissect a safety margin of tissue which is free of the predetermined tissue type. The border analyzer may determine whether the surgeon has succeeded in dissecting a safety margin, and which portion of the border is not free of the predetermined tissue type.

The border analyzer may comprise a distance measurer configured to measure a distance between a predetermined tissue type occurring within the dissected portion and the outer border of the dissected portion. This allows determining the thickness of a margin which is free of the predetermined tissue type.

The alignment unit may be arranged for identifying a portion of the body image corresponding to the portion of the margin comprising the predetermined tissue type. This allows the user to see which portion of the body may need additional resection.

The system may comprise a lump border definer for enabling a user to specify a border of a lump of tissue to be dissected in a body image, wherein the alignment unit is arranged for computing the alignment further based on the border of the lump of tissue to be dissected. This body image may be the same body image or another body image relating to the same patient. This feature helps to align the specimen image with the body image, because the location and/or the orientation can be aligned using the location and/or shape of the outer border of the lump of tissue to be dissected and/or the outer border of the actually dissected portion.

The alignment unit may be arranged for computing the alignment also in dependence on a marker which is visible in the specimen image. This helps to improve the accuracy and/or efficiency of the alignment. The marker may be also visible in the body image, in which case the alignment may be even more accurate.

The marker may be indicative of an orientation of the specimen with respect to the body. For example, the marker may be indicative of an axilla side, a mammilla side, a lateral side, or a medial side of the dissected portion. This helps to find the correct orientation of the specimen with respect to the body and/or body image.

The system may comprise an image analysis subsystem for the identification of anatomical structures depicted by the body image, such as the mammilla, the axilla and the lateral and medial part of the thorax. The analysis subsystem can calculate the orientation of the lump and / or of intrinsic markers relative to the identified anatomical structures. This may be done using markers in the specimen which indicate the direction of such identified anatomical structures. This improves the alignment.

The system may comprise a deformation model that models a deformation of the specimen, for example as induced by the dissection or by imaging the specimen. This helps to improve the accuracy of the alignment. For example, deformations of the specimen due to cutting forces and due to the placement of the specimen in the imaging system may be modeled. In addition, morphological changes due to ex-vivo effects like the loss of fluid may be modeled.

The system may comprise an appearance model that models the appearance of tissue types depicted by different image modalities or by applying different imaging protocols. This may help to identify different tissue types or may improve the accuracy of the alignment of images acquired by different image modalities, in particular when the specimen image and the body image were acquired with different image modalities.

The system may comprise a visualization subsystem for generating a visualization of the alignment, so as to indicate a position and/or orientation of at least part of the dissected portion with respect to the body. This conveys the information provided by the alignment to the user.

The alignment unit may be arranged for performing the computing based on an intensity pattern, such as a pattern of micro-calcifications or anatomical structures present in the body image and/or in the specimen image. Such a pattern present in the specimen image may also be present in a pre-operational image. Consequently, the pattern can be used to align the specimen image with the pre-operational image.

Another aspect of the invention provides an image acquisition apparatus comprising a detector for acquiring the body image and/or the specimen image, and a system as set forth. Such a combination allows integrating the functionality of image acquisition and alignment in a single device.

Another aspect of the invention provides a medical workstation comprising a system as set forth, and a display operatively coupled to the visualization subsystem for displaying the alignment. This provides a convenient workstation for implementing and using the system.

Another aspect of the invention provides a method of handling a specimen image, as defined in claim 12.

Another aspect of the invention provides a computer program product comprising instructions for causing a processor system to perform a method as set forth.

It will be appreciated by those skilled in the art that two or more of the above-mentioned embodiments, implementations, and/or aspects of the invention may be combined in any way deemed useful.

Modifications and variations of the image acquisition apparatus, the workstation, the method, and/or the computer program product, which correspond to the described modifications and variations of the system, can be carried out by a person skilled in the art on the basis of the present description.

A person skilled in the art will appreciate that the method may be applied to multi-dimensional image data, e.g. to two-dimensional (2-D), three-dimensional (3-D) or four-dimensional (4-D) images, acquired by various acquisition modalities such as, but not limited to, X-ray Imaging, mammography, tomosynthesis, Computed Tomography (CT), Magnetic Resonance Imaging (MRI), Ultrasound (US), Positron Emission Tomography (PET), Single Photon Emission Computed Tomography (SPECT), and Nuclear Medicine (NM).

### BRIEF DESCRIPTION OF THE DRAWINGS

These and other aspects of the invention are apparent from and will be elucidated with reference to the embodiments described hereinafter. In the drawings,
Fig. 1 is a block diagram showing aspects of a system for handling a specimen image;
Fig. 2 is a flow chart showing aspects of a method of handling a specimen image;
Fig. 3 shows a sketch of a specimen with markers;
Fig. 4A shows a body radiogram;
Fig. 4B shows a radiogram of a specimen from the body shown in Fig. 4A;
Fig. 5A shows a body radiogram and a specimen radiogram and a bounding box;
Fig. 5B shows the specimen radiogram shown in Fig. 5A;
Fig. 6 is an illustration of three rotational axes.

### DETAILED DESCRIPTION OF EMBODIMENTS

This description describes, inter alia, a system and method for handling a specimen image. The description focuses on the example application of breast specimen imaging. However, the techniques described may also be applied to specimen images of other parts of the human or animal body, for example the lungs, or another organ, or a portion of a limb.

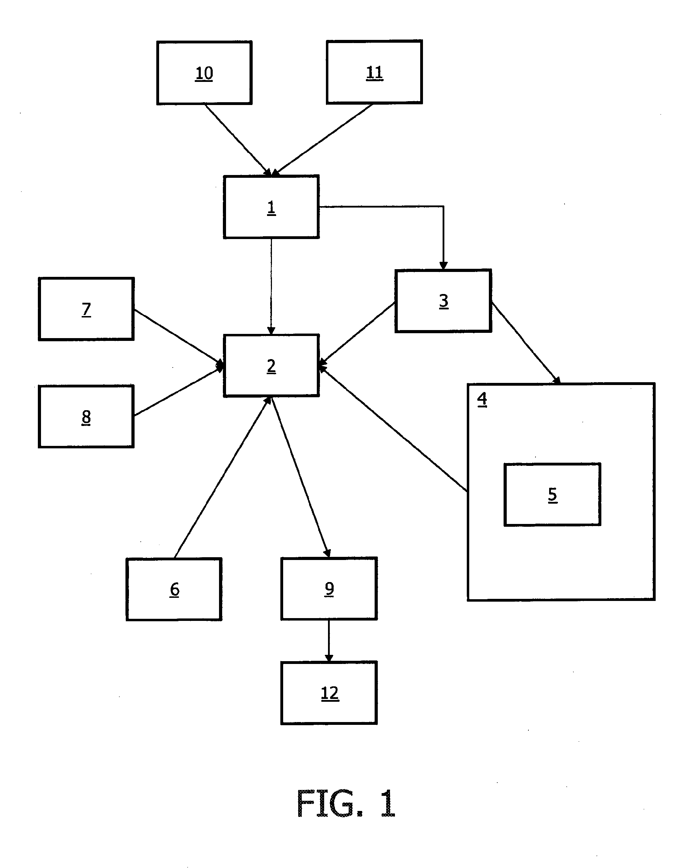

A block diagram of such a system is shown in Fig. 1. The Figure shows an image input 1 configured to receive a body image representing at least a portion of a living body and a specimen image representing a dissected portion of the living body. Such image input 1 may comprise a connection to an image repository, and/or a direct connection to an image acquisition device, such as a mammography x-ray unit. This image input 1 may further comprise a user interface element in which a user may specify which image is a body image and which image is a specimen image. Also, the image input 1 may comprise a control element for controlling an image acquisition device such as to perform an acquisition protocol optimized for acquiring the body image or the specimen image. Such acquisition protocol may be optimized in respect of the x-ray dose to be used or the field-of-view, for example. The body image may be an image of a portion of a living body. For example, the body image may show a breast. The body image may be a mammogram. The body image may alternatively show another part of the body, for example another organ such as a lung or the heart. The specimen image shows a piece of dissected tissue, which may be relatively thin and small compared to the part of the body shown in the body image.

The system may further comprise an alignment unit 2 configured to compute an alignment of the specimen image with the body image. This alignment may be based on image content of the specimen image and/or the body image. Examples of how the alignment may take place are described in more detail hereinafter.

The system may comprise a border detector 3 operatively connected to the alignment unit 2. The border detector 3 is configured to detect at least part of an outer border of the dissected portion in the specimen image. This may be done automatically, using image processing techniques, by detecting the transition between the specimen and the surroundings of the specimen (for example air).

The alignment unit 2 may be configured to compute the alignment also based on the outer border of the dissected portion. For example, the alignment unit 2 may use the outer border as the border of a volume of interest; the image elements outside the volume of interest may be discarded in the alignment process.

The system may comprise a border analyzer 4 for identifying a portion of the outer border comprising a predetermined tissue type. For example, a border comprising a margin of a predetermined width may be scanned for the presence of the predetermined tissue type, based on an image property of the predetermined tissue type. This predetermined tissue type may be cancerous tissue. This can be used to determine whether the boundary of the specimen contains a cancer-free margin, and which particular portion of the outer border is not cancer-free.

The border analyzer 4 may comprise a distance measurer 5 configured to measure a distance between a predetermined tissue type in the dissected portion and the outer border of the dissected portion. This allows measuring the thickness of the margin which is free of the predetermined tissue type.

The alignment unit 2 may be arranged for identifying a portion of the body image corresponding to the portion of the outer border comprising the predetermined tissue type. This enables the user to see which portion of the body still may contain the predetermined tissue type, so that the user may dissect it.

The system may comprise a lump border definer 6 for enabling a user to specify a border of a lump of tissue to be dissected in a body image. The user can do this, for example, during planning the dissection. The alignment unit 2 may be arranged for computing the alignment further based on the border of the lump of tissue to be dissected. For example, the specimen image may be aligned by translating, scaling, rotating, and/or deforming such that the contours best match.

The alignment unit 2 may be arranged for computing the alignment also in dependence on a marker which is visible in the specimen image. For example, a marker may be inserted into the specimen before the dissection and be present in the specimen during specimen imaging. The body image may also show the marker, in which case the images may be aligned such that the markers of both images coincide.

The system may comprise a deformation model 7. The deformation model 7 may model a deformation of the dissected portion. For example, such a deformation model may take account of deformations occurring because of the act of dissecting. Also, the deformations may be caused by bleeding or by handling of the specimen, for example during acquisition of the specimen image.

The system may comprise an appearance model 8. The appearance model 8 may model the appearance of tissue types depicted by different image modalities or by applying different imaging protocols. This way, features of the body image may be translated into features of the specimen image or vice versa. This allows recognizing corresponding image features in the specimen image and the body image, which corresponding features may be used to align the two images.

The system may comprise a visualization subsystem 9 for generating a visualization of the alignment. The visualization may provide an indication of a position and/or orientation of at least part of the dissected portion with respect to the body. For example, the specimen image may be shown as an aligned overlay on top of the body image. Alternatively, the location of the specimen may be indicated in the body image. Alternatively, the outer border of the specimen may be visualized in the body image to show the location and/or orientation and/or size of the specimen with respect to the body. It is also possible to show a portion of the border margin which contains the predetermined tissue type in the body image.

The system may be integrated in an image acquisition apparatus comprising a detector 10 for acquiring the body image and/or a detector 11 for acquiring the specimen image. These detectors 10 and 11 may also be the same detector. The detectors 10 and 11 may be connected to the image input 1. Detector 10 may be a mammography unit, for example, and detector 11 may be an x-ray unit.

The system may be integrated in a medical workstation. Such a medical workstation may comprise a display operatively coupled to the visualization subsystem for displaying the alignment. Moreover, user controls such as a mouse input or a keyboard may be provided.

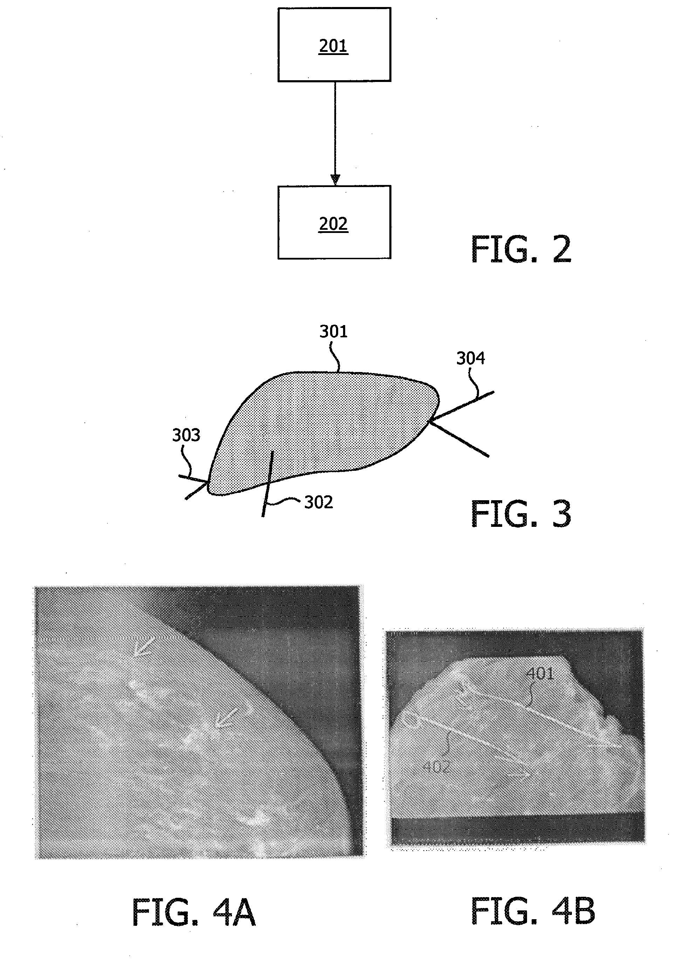

Fig. 2 shows a method of handling a specimen image. The method comprises the step of receiving 201 a body image representing at least a portion of a living body and a specimen image representing a dissected portion of the living body. The method further comprises the step of computing 202 an alignment of the specimen image with the body image, based on image content of the specimen image and/or the body image. The method may be implemented as a computer program product. Such a computer program product may be arranged for being executed on the medical workstation described above, for example.

The system and method described herein may be configured, inter alia, to automatically align a specimen image with a pre-operational image of a patient. The aligned specimen radiogram may be presented in different viewing modes that may improve the comparison between the pre-operational image and the specimen image. In an interactive mode, the user may be enabled to correct the automatically performed alignment.

However, the alignment of the specimen radiogram with the pre-operational images may take into account differences in orientation and/or scaling of the images. In addition, the dissected tissue might be deformed due to the surgical and/or imaging procedure. The alignment of specimen radiograms with pre-operational images of the patient may be performed automatically. The aligned specimen radiograms may be displayed in different viewing modes that may enhance the comparison with the pre-operational image. In addition, the surgeon may be enabled to correct interactively any automatically performed alignment.

Instead of a pre-operational image, an intra-operational image of the patient may be used. The expression "body image" is used in this description to refer to an image representing at least a portion of a living body. This "portion" of the body is an integral portion of the body in the sense that the portion has not been dissected from the body at the time the image is acquired. A "specimen image" refers to an image of a tissue which has been dissected from the body at the time the image is acquired.

The alignment of the specimen radiogram with the ROI of the pre-operational image may be based on one or a combination of: the grey value characteristics of both images, texture-based information, for example a pattern of micro-calcifications and/or anatomical structures, the orientation of the specimen radiogram (axilla and mammilla) given by artificial markers, the guide wire as intrinsic marker. The guide wire may be helpful in the alignment, especially if the guide wire is shown in both images.

The alignment may be performed between 2D x-ray images, being, for example, a mammogram and a specimen radiogram. Alternatively, the alignment may be performed on images acquired by different modalities, e.g. a pre-operational breast magnetic resonance (MR) image and a specimen radiogram. An appearance model may be used to transform the modality specific features of the imaged specimen into the modality specific features of the body image. For example, a 2D to 3D or a 3D to 4D alignment may be performed, depending on the image types used for the body image and the specimen image.

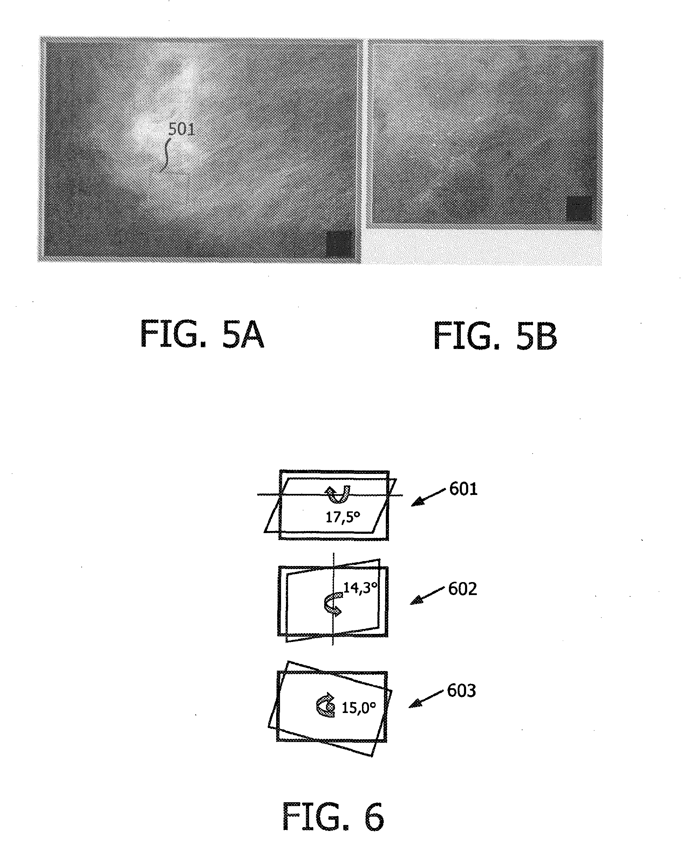

The result of the alignment may be presented in any one or a combination of different viewing modes. For example, the body image and the specimen image may be displayed side by side. Moreover, the original location and/or orientation of the specimen in the body may be indicated in the body image, for example by means of one or more arrows or by means of a bounding box or contour corresponding to the specimen object in the body image. The bounding box of the body image and the specimen image may be placed side by side. The body image may be overlaid with the specimen image. The specimen image may be projected into the body image, in particular when the body image is three-dimensional. In addition, or alternatively, the original orientation of the specimen in the body may be shown, for example using pictograms. An example of such pictograms is shown in Fig. 6.

The user may be enabled to correct the alignment of the specimen image with the body image. This correction may include, for example, changing the orientation and/or the scaling of the specimen image with respect to the body image. For example, the user may be enabled to manipulate the bounding box overlaid onto the body image, for example by rotating, and/or resizing the bounding box. In another example, the user may be enabled to manipulate the pictograms indicating the orientation. In another example, the user may be enabled to correct the orientation and scaling factor textually. The interactively performed correction may be displayed immediately.

The techniques described herein may be implemented as part of a console of an imaging system, a breast workstation, or a dedicated computer system for interventional planning, surgical planning, guidance and/or control.

Fig. 3 shows a sketch of a resected specimen 301. The Figure shows that the specimen contains markers 303, 304 to determine its original orientation in the body. The specimen contains a guide wire 302. Because this guide wire may be visible in both the body image and the specimen image, it can be used as a marker to align the specimen image with the body image. Moreover, a marker 303 indicates the direction of the mammilla and a marker 304 indicates the direction of the axilla. These markers may be used to determine the orientation of the specimen with respect to the body. Consequently, these markers may be used by an automatic alignment unit to align the specimen image with the body image, in particular if the location of mammilla and/or axilla is known with respect to the body image.

Fig. 4A is a mammogram showing a breast before dissection of tissue. Fig. 4B shows a magnified specimen radiogram with guide wires 401 and 402. In both images, the arrows point to micro-calcifications indicating ductal carcinoma in situ (DCIS). The guide wires 401 and 402 can be used to align the specimen radiogram.

Fig. 5A is a pre-operational mammogram showing DCIS before dissection in MLO view. Fig. 5B is a magnified specimen radiogram showing the dissected specimen. In the pre-operational mammogram, the region of the dissected tissue is marked by a rectangle 501.

Fig. 6 illustrates how the orientation of the dissected tissue can be shown. The rotation about the x, y, and z axis is shown in pictograms 601, 602, and 603. These pictograms can also be used to enable a user to interactively correct the automatically calculated orientation of the dissected tissue, for example by means of a drag-and-drop operation.

The systems and methods described herein may be used as an aid when dissecting tissue from a living body. For example, the systems and methods can be used when dissecting cancerous tissue, such as different types of breast cancer including a solid tumor, e.g. invasive ductal carcinoma, or cancer of other organs such as liver cancer or lung cancer. The 'predetermined tissue type' described above in respect of Fig. 1 may be such a cancer type.

When planning pathological examination and during the reporting of the pathological results, the techniques described herein may be applied. Based on specimen images a pathology procedure can be planned. Such a plan may indicate where to perform a detailed examination. Moreover, the localization of pathological findings can be improved by using the specimen radiogram. This will improve the communication between the pathologist and the breast surgeon. This is of special importance for pathological examinations that are performed whilst the patient is in the operating theatre and the surgeon is waiting for the pathological result to decide if a resection is required.

Models may be used to improve the alignment of the body and the specimen image. First, a deformation model may be implemented to model the effects induced by the dissection of the tissue and the imaging of the specimen. Second, an ex-vivo model may be used to model the ex-vivo effects like the loss of fluids. Third, appearance models may be used to model the appearance of different tissue types like fatty tissue, fibrotic tissue, cysts, tumor tissue as depicted by different image modalities and / or by applying different acquisition protocols.

Example body images are 2D mammograms, for example in cranio-caudal CC and/or MLO (medio lateral oblique) view, ultrasound image, magnetic resonance image, tomosynthesis image. The body image may be a pre-operational image, for example. Alternatively an intra-operational image may be used, showing the cavity created by the dissection. The same modalities may be used for the specimen image, for example an x-ray image or a tomosynthesis image.

The alignment may be performed, for example, by performing the following steps. The boundary (or margin) of the specimen may be determined in the specimen image. The specimen image may first be localized roughly in the body image. This localization may comprise identification of the guide-wires in the body image and specimen image to determine the location. Also, a region-of-interest may be defined in the body image, for example based on the guide wire and an estimated size, or by means of a user input. A region of interest may also be defined in the specimen image; the two regions of interest may then be used to position the specimen image with respect to the body image. This positioning may be based on a model that describes the deformation of the specimen depending on tissue characteristics and forces induced by the dissection of the tissue.

Next, a rough orientation of the specimen image with respect to the body image may be determined. This orientation may be based on the identification of the guide-wires in the body image and the specimen image and their rotational alignment. Moreover, the orientation may be determined based on identification and alignment of at least one anatomical marker external to the specimen, such as the axilla and the mammilla and the lateral/medial part of the breast in the pre-op image and surgical markers visible in the specimen image that indicate the direction of the mammilla, axilla and the lateral part of the breast.

The rough alignment described above may be refined as follows. First, the portion of the specimen image outside and on the outer border of the specimen may be excluded from processing. Registration may be performed based on mutual information. Such mutual information technique may handle images acquired by different modalities. This way, information is used that is available in both body image and specimen image, even if a different image modality is used. Other kinds of registration may also be used. When different imaging modalities are used, optionally a mapping of information given by these different image modalities and their application to body (breast) imaging and specimen imaging are modeled. The "mapping" model may be used for image registration.

In case the body image is three-dimensional and the specimen image comprises a set of one or more projection images such as radiograms, for example two orthogonal projections, the registration may be adapted to a 3D-2D problem.

For the localization of the portion of a body image that needs to be re-shaved, the margin of the specimen image may be aligned with the body image. To this end, the part of the breast that has to be dissected may be first identified in the body image. This step may be performed by the surgeon during surgical planning based on the pre-operational images. This step may be assisted by image processing tools (segmentation tools) and performed manually or semi-automatically. The outline of the part of the breast that has to be dissected may be stored.

The orientation of the said outline with respect to the mammilla, the axilla, the lateral part of the breast may be determined. To this end, the mammilla, the axilla and the breast muscle may be segmented automatically.

Identification (manually or semi-automatically by the assistance of segmentation tools) of the cancerous parts of the specimen from the specimen image may be performed. Their distance to the margin of the specimen may be determined. One or more positive margin portions may be identified. These positive margin portions are portions which are not cancer-free (more generally, which contain a predetermined tissue type).

The alignment may be based on the margin (outer border) of the specimen and the outline of the part of the breast that had to be dissected. This may be done based on the shapes of the border and outline, one or more guide-wires, surgical markers placed on specimen and depicted by specimen images, for example.

The part of the margin comprising the predetermined tissue type may then be visualized in the body image, to enable the surgeon to make a further dissection at the indicated position. The visualization may be performed in a pre-operational body image or an intra-operational body image showing the surgical cavity.

The alignment may also be performed using a pre-operational body image or an intra-operational body image showing the surgical cavity. In the latter case, the cavity may be automatically segmented to obtain the boundary of the lump which has been dissected. This boundary may then be aligned with the boundary of the specimen in the specimen image.

It will be appreciated that the invention also applies to computer programs, particularly computer programs on or in a carrier, adapted to put the invention into practice. The program may be in the form of a source code, an object code, a code intermediate source and object code such as in a partially compiled form, or in any other form suitable for use in the implementation of the method according to the invention. It will also be appreciated that such a program may have many different architectural designs. For example, a program code implementing the functionality of the method or system according to the invention may be sub-divided into one or more sub-routines. Many different ways of distributing the functionality among these sub-routines will be apparent to the skilled person. The sub-routines may be stored together in one executable file to form a self-contained program. Such an executable file may comprise computer-executable instructions, for example, processor instructions and/or interpreter instructions (e.g. Java interpreter instructions). Alternatively, one or more or all of the sub-routines may be stored in at least one external library file and linked with a main program either statically or dynamically, e.g. at run-time. The main program contains at least one call to at least one of the sub-routines. The sub-routines may also comprise function calls to each other. An embodiment relating to a computer program product comprises computer-executable instructions corresponding to each processing step of at least one of the methods set forth herein. These instructions may be sub-divided into sub-routines and/or stored in one or more files that may be linked statically or dynamically. Another embodiment relating to a computer program product comprises computer-executable instructions corresponding to each means of at least one of the systems and/or products set forth herein. These instructions may be sub-divided into sub-routines and/or stored in one or more files that may be linked statically or dynamically.

The carrier of a computer program may be any entity or device capable of carrying the program. For example, the carrier may include a storage medium, such as a ROM, for example, a CD ROM or a semiconductor ROM, or a magnetic recording medium, for example, a floppy disc or a hard disk. Furthermore, the carrier may be a transmissible carrier such as an electric or optical signal, which may be conveyed via electric or optical cable or by radio or other means. When the program is embodied in such a signal, the carrier may be constituted by such a cable or other device or means. Alternatively, the carrier may be an integrated circuit in which the program is embedded, the integrated circuit being adapted to perform, or used in the performance of, the relevant method.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A system for handling a specimen image, comprising:
an image input (1) configured to receive a body image representing at least a portion of a living body and a specimen image representing a dissected portion of the living body;
an alignment unit (2) configured to compute an alignment of the specimen image with the body image, based on image content of the specimen image and the body image;
a border detector (3) operatively connected to the alignment unit (2) and configured to detect at least part of an outer border of the dissected portion in the specimen image;
**characterized in that** it further comprises:
a border analyzer (4) for identifying a predetermined tissue type in a margin of the dissected portion adjacent the outer border for determining which portion of the margin contains the predetermined tissue type; and
a visualization subsystem (9) for generating a visualization of the alignment by showing the portion of the margin which contains the predetermined tissue type in the body image.

2. The system according to claim 1, wherein the alignment unit (2) is configured to compute the alignment also based on the outer border of the dissected portion.

3. The system according to claim 1, wherein the border analyzer (4) comprises a distance measurer (5) configured to measure a distance between a predetermined tissue type in the dissected portion and the outer border of the dissected portion.

4. The system according to claim 1, wherein the alignment unit (2) is arranged for identifying a portion of the body image corresponding to the portion of the margin comprising the predetermined tissue type.

5. The system according to claim 1, further comprising a lump border definer (6) for enabling a user to specify a border of a lump of tissue to be dissected in a body image, wherein the alignment unit (2) is arranged for computing the alignment further based on the border of the lump of tissue to be dissected.

6. The system according to claim 1, wherein the alignment unit (2) is arranged for computing the alignment also in dependence on a marker which is visible in the specimen image.

7. The system according to claim 1, comprising a deformation model (7) that models a deformation of the dissected portion.

8. The system according to claim 1, comprising an appearance model (8) that models the appearance of tissue types depicted by different image modalities or by applying different imaging protocols.

9. The system according to claim 1, wherein the visualization subsystem (9) is arranged for generating a visualization of the alignment, so as to indicate a position and/or orientation of at least part of the dissected portion with respect to the body.

10. An image acquisition apparatus comprising a detector (10, 11) for acquiring the body image and/or the specimen image, and the system according to claim 1.

11. A medical workstation comprising the system according to claim 1, and a display operatively coupled to the visualization subsystem (9) for displaying the alignment.

12. A method of handling a specimen image, comprising:
receiving (201) a body image representing at least a portion of a living body and a specimen image representing a dissected portion of the living body;
computing (202) an alignment of the specimen image with the body image, based on image content of the specimen image and the body image;
detecting at least part of an outer border of the dissected portion in the specimen image;
**characterized in that** it further comprises:
identifying a predetermined tissue type in a margin of the dissected portion adjacent the outer border for determining which portion of the margin contains the predetermined tissue type; and
generating a visualization of the alignment by showing the portion of the margin which contains the predetermined tissue type in the body image.

13. A computer program product comprising instructions for causing a processor system to perform the method according to claim 12.

## Patentansprüche

1. System zur Handhabung eines Probenbilds, das Folgendes umfasst:
eine Bildeingabeeinheit (1), die konfiguriert ist, um ein Körperbild, das mindestens einen Teil eines lebenden Körpers darstellt, und ein Probenbild, das einen dissektierten Teil des lebenden Körpers darstellt, zu empfangen;
eine Ausrichtungseinheit (2), die konfiguriert ist, um eine Ausrichtung des Probenbilds mit dem Körperbild basierend auf Bildinhalten des Probenbilds und des Körperbilds zu berechnen;
einen Randdetektor (3), der betriebsfähig mit der Ausrichtungseinheit (2) verbunden ist und konfiguriert ist, um mindestens einen Teil eines Außenrands des dissektierten Teils in dem Probenbild zu detektieren;
**dadurch gekennzeichnet, dass** es weiterhin Folgendes umfasst:
einen Randanalysator (4) zum Identifizieren eines vorgegebenen Gewebetyps in einem an den Außenrand angrenzenden Randbereich des dissektierten Teils, um zu ermitteln, welcher Abschnitt des Randbereichs den vorgegebenen Gewebetyp enthält; und
ein Visualisierungs-Subsystem (9) zum Erzeugen einer Visualisierung der Ausrichtung durch Zeigen des Randbereichabschnitts, der den vorgegebenen Gewebetyp in dem Körperbild enthält.

2. System nach Anspruch 1, wobei die Ausrichtungseinheit (2) konfiguriert ist, um die Ausrichtung auch basierend auf dem Außenrand des dissektierten Teils zu berechnen.

3. System nach Anspruch 1, wobei der Randanalysator (4) eine Abstandsmesseinheit (5) umfasst, die konfiguriert ist, um einen Abstand zwischen einem vorgegebenen Gewebetyp in dem dissektierten Teil und dem Außenrand des dissektierten Teils zu messen.

4. System nach Anspruch 1, wobei die Ausrichtungseinheit (2) dafür vorgesehen ist, einen Teil der Körperbilds zu identifizieren, der mit dem Randbereichsabschnitt übereinstimmt, welcher den vorgegebenen Gewebetyp umfasst.

5. System nach Anspruch 1, das weiterhin eine Knotenrand-Definiereinheit (6) umfasst, um einem Benutzer zu ermöglichen, einen Rand eines zu dissektierenden Gewebeknotens in einem Körperbild zu spezifizieren, wobei die Ausrichtungseinheit (2) dafür vorgesehen ist, die Ausrichtung weiterhin basierend auf dem Rand des zu dissektierenden Gewebeknotens zu berechnen.

6. System nach Anspruch 1, wobei die Ausrichtungseinheit (2) dafür vorgesehen ist, die Ausrichtung auch in Abhängigkeit von einer Markierung zu berechnen, die in dem Probenbild sichtbar ist.

7. System nach Anspruch 1, mit einem Deformationsmodell (7), das eine Deformation des dissektierten Teils modelliert.

8. System nach Anspruch 1, mit einem Erscheinungsmodell (8), das die Erscheinung der durch verschiedene Bildmodalitäten oder durch Anwenden verschiedener Bildgebungsprotokolle darstellten Gewebetypen modelliert.

9. System nach Anspruch 1, wobei das Visualisierungs-Subsystem (9) dafür vorgesehen ist, eine Visualisierung der Ausrichtung zu erzeugen, um eine Position und/oder Orientierung von mindestens einen Teil des dissektierten Teils in Bezug auf den Körper anzugeben.

10. Bilderfassungsgerät mit einem Detektor (10, 11) zum Erfassen des Körperbilds und/oder des Probenbilds, und mit dem System nach Anspruch 1.

11. Medizinische Workstation mit dem System nach Anspruch 1, und einer betriebsfähig mit dem Visualisierungs-Subsystem (9) gekoppelten Anzeigeeinheit zur Anzeige der Ausrichtung.

12. Verfahren zur Handhabung eines Probenbilds, das Folgendes umfasst:
Empfangen (201) eines Körperbilds, das mindestens einen Teil eines lebenden Körpers darstellt, und eines Probenbilds, das einen dissektierten Teil des lebenden Körpers darstellt;
Berechnen (202) einer Ausrichtung des Probenbilds mit dem Körperbild basierend auf Bildinhalten des Probenbilds und des Körperbilds;
Detektieren von mindestens einem Teil eines Außenrands des dissektierten Teils in dem Probenbild;
**dadurch gekennzeichnet, dass** es weiterhin Folgendes umfasst:
Identifizieren eines vorgegebenen Gewebetyps in einem an den Außenrand angrenzenden Randbereich des dissektierten Teils, um zu ermitteln, welcher Abschnitt des Randbereichs den vorgegebenen Gewebetyp enthält; und
Erzeugen einer Visualisierung der Ausrichtung durch Zeigen des Randbereichabschnitts, der den vorgegebenen Gewebetyp in dem Körperbild enthält.

13. Computerprogrammprodukt mit Anweisungen zum Veranlassen eines Prozessorsystems, das Verfahren nach Anspruch 12 durchzuführen.

## Revendications

1. Système pour traiter une image échantillon, comprenant :
une entrée d'image (1) configurée pour recevoir une image corporelle représentant au moins une partie d'un corps vivant et une image échantillon représentant une partie disséquée du corps vivant ;
une unité d'alignement (2) configurée pour calculer un alignement de l'image échantillon avec l'image corporelle, en fonction d'un contenu d'image de l'image échantillon et/ou de l'image corporelle ;
un détecteur de limite (3) fonctionnellement connecté à l'unité d'alignement (2) et configuré pour détecter au moins une partie d'une limite extérieure de la partie disséquée dans l'image échantillon ;
**caractérisé en ce qu'**il comprend en outre :
un analyseur de limite (4) pour identifier un type de tissu prédéterminé dans une marge de la partie disséquée adjacente à la limite extérieure pour déterminer la partie de la marge qui contient le type de tissu prédéterminé ; et
un sous-système de visualisation (9) pour générer une visualisation de l'alignement en présentant la partie de la marge qui contient le type de tissu prédéterminé dans l'image corporelle.

2. Système selon la revendication 1, dans lequel l'unité d'alignement (2) est configurée pour calculer l'alignement également en fonction de la limite extérieure de la partie disséquée.

3. Système selon la revendication 1, dans lequel l'analyseur de limite (4) comprend un mesureur de distance (5) configuré pour mesurer une distance entre un type de tissu prédéterminé dans la partie disséquée et la limite extérieure de la partie disséquée.

4. Système selon la revendication 1, dans lequel l'unité d'alignement (2) est agencée pour identifier une partie de l'image corporelle correspondant à la partie de la marge comprenant le type de tissu prédéterminé.

5. Système selon la revendication 1, comprenant en outre un définisseur de limite de masse (6) pour permettre à un utilisateur de spécifier une limite d'une masse de tissu destinée à être disséquée dans une image corporelle,
dans lequel l'unité d'alignement (2) est agencée pour calculer l'alignement en fonction en outre de la limite de la masse de tissu destinée à être disséquée.

6. Système selon la revendication 1, dans lequel l'unité d'alignement (2) est agencée pour calculer l'alignement également en fonction d'un repère qui est visible dans l'image échantillon.

7. Système selon la revendication 1, comprenant un modèle de déformation (7) qui montre une déformation de la partie disséquée.

8. Système selon la revendication 1, comprenant un modèle d'apparence (8) qui montre l'apparence de types de tissu illustrés par différentes modalités d'image ou en appliquant différents protocoles d'imagerie.

9. Système selon la revendication 1, dans lequel le sous-système de visualisation (9) est agencé pour générer une visualisation de l'alignement, afin d'indiquer une position et/ou une orientation d'au moins une partie de la partie disséquée par rapport au corps.

10. Appareil d'acquisition d'image comprenant un détecteur (10, 11) pour acquérir l'image corporelle et/ou l'image échantillon, et le système selon la revendication 1.

11. Poste de travail médical comprenant le système selon la revendication 1, et un écran d'affichage fonctionnellement couplé au sous-système de visualisation (9) pour afficher l'alignement.

12. Procédé de traitement d'une image échantillon, comprenant :
la réception (201) d'une image corporelle représentant au moins une partie d'un corps vivant et d'une image échantillon représentant une partie disséquée du corps vivant ;
le calcul (202) d'un alignement de l'image échantillon avec l'image corporelle, en fonction d'un contenu d'image de l'image échantillon et de l'image corporelle ;
la détection d'au moins une partie d'une limite extérieure de la partie disséquée dans l'image échantillon ;
**caractérisé en ce qu'**il comprend en outre :
l'identification d'un type de tissu prédéterminé dans une marge de la partie disséquée adjacente à la limite extérieure pour déterminer la partie de la marge qui contient le type de tissu prédéterminé ; et
la génération d'une visualisation de l'alignement en présentant la partie de la marge qui contient le type de tissu prédéterminé dans l'image corporelle.

13. Produit programme d'ordinateur comprenant des instructions pour faire en sorte qu'un système processeur réalise le procédé selon la revendication 12.
